(19)

Europäisches
Patentamt
European
Patent Office
Office européen
des brevets

(11) **EP 3 420 466 B1**

(12) **EUROPEAN PATENT SPECIFICATION**

(45) Date of publication and mention
of the grant of the patent:
**14.06.2023 Bulletin 2023/24**

(21) Application number: **17755922.6**

(22) Date of filing: **23.02.2017**

(51) International Patent Classification (IPC):
***G06N 5/00*** *(2023.01)*      ***G06F 17/11*** *(2006.01)*

(52) Cooperative Patent Classification (CPC):
**G06F 17/11; G06N 5/01;** G06N 10/00

(86) International application number:
**PCT/IB2017/051038**

(87) International publication number:
**WO 2017/145086 (31.08.2017 Gazette 2017/35)**

(54) **METHOD AND SYSTEM FOR SOLVING THE LAGRANGIAN DUAL OF A BINARY POLYNOMIALLY CONSTRAINED POLYNOMIAL PROGRAMMING PROBLEM USING A BINARY OPTIMIZER**

VERFAHREN UND SYSTEM ZUR LÖSUNG DER LAGRANGE-DUALITÄT EINES BINÄREN POLYNOMISCH GEBUNDENEN POLYNOMIALEN PROGRAMMIERUNGSPROBLEMS UNTER VERWENDUNG EINES BINÄREN OPTIMIERERS

PROCÉDÉ ET SYSTÈME PERMETTANT DE RÉSOUDRE LE DUAL LAGRANGIEN D'UN PROBLÈME DE PROGRAMMATION POLYNOMIALE CONTRAINTE POLYNOMIALEMENT BINAIRE AU MOYEN D'UN OPTIMISEUR BINAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2016 CA 2921711**
**23.02.2016 US 201615051271**

(43) Date of publication of application:
**02.01.2019 Bulletin 2019/01**

(73) Proprietor: **1QB Information Technologies Inc.**
**Vancouver, BC V6E 4B1 (CA)**

(72) Inventors:
• **KARIMI, Sahar**
**Vancouver, British Columbia V6Z 2Z2 (CA)**
• **RONAGH, Pooya**
**Kitchener, Ontario N2G 1S4 (CA)**

(74) Representative: **Hahner, Ralph et al**
**Wallinger Ricker Schlotter Tostmann**
**Patent- und Rechtsanwälte Partnerschaft mbB**
**Zweibrückenstraße 5-7**
**80331 München (DE)**

(56) References cited:
WO-A2-2015/060915      CA-A1- 2 881 033
CA-A1- 2 881 033        US-A1- 2014 025 606
US-A1- 2015 006 443

• **POOYA RONAGH ET AL: "Solving constrained quadratic binary problems via quantum adiabatic evolution", ARXIV.ORG, CORNELL UNIVERSITY LIBRARY, 201 OLIN LIBRARY CORNELL UNIVERSITY ITHACA, NY 14853, 16 September 2015 (2015-09-16), XP081351981,**
• **KARIMI, S. et al.: "A Subgradient Approach For Constrained Binary Optimization Via Quantum Adiabatic Evolution", arxiv. org, May 2016 (2016-05), XP055600492, Retrieved from the Internet: URL:www.arxiv.org/pdf/1605.09462.pdf [retrieved on 2017-05-10]**
• **RONAGH, P. et al.: "Solving Constrained Quadratic Binary Problems Via Quantum Adiabatic Evolution", arXiv.org, 16 September 2015 (2015-09-16), pages 1029-1047, XP081351981, Retrieved from the Internet: URL:https://arxiv.org/pdf/1509.05001.pdf [retrieved on 2017-05-10]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATIONS**

This patent application claims priority on Canadian Patent Application No. 2,921,711, filed on February 23, 2016 and on United States Patent Application No. 15/051,271, filed on February 23, 2016.
This application is related to Canadian Patent No. 2,881,033.

**FIELD**

The invention relates to computing. More precisely, this invention pertains to a method and system for solving the Lagrangian dual problem corresponding to a binary polynomially constrained polynomial programming problem using a binary optimizer.

**BACKGROUND**

Background information on duality and Lagrangian dual of a quadratic binary programming problem can be found in Canadian Patent No. 2,881,033.
In duality theory, several different types of dualization and dual problems are proposed. One type of dual problems are the Lagrangian dual problems. A thorough description of Lagrangian duality theory is disclosed in "Nonlinear integer programming" by Duan Li and Xiaoling Sun. For applications of Lagrangian techniques in discrete optimization, refer to "A survey of Lagrangean techniques for discrete optimization" by Jeremy F. Shapiro, Operations Research Center, Massachusetts Institute of Technology, Cambridge, Massachusetts, and to "Lagrangean relaxation for integer programming" by A.M. Geoffrion, Mathematics Programming Study 2 (1974) 82-114, North-Holland Publishing Company.
There are several methods proposed for solving the Lagrangian dual problems, e.g., subgradient method, outer Lagrangian linearization method, and bundle method as disclosed in Chapter 3 of "Nonlinear integer programming" by Duan Li and Xiaoling Sun. The difficulty of having efficient implementations of such algorithms is the urge for efficient methods for solving hard nonlinear integer programming problems in various stages of these methods. For example, the single constrained quadratic 0-1 knapsack problem can be solved using an efficient branch and bound method based on Lagrangian duality as explained in Section 11.5 of "Nonlinear integer programming" by Duan Li and Xiaoling Sun, but the proposed method cannot be generalized for multi-dimensional knapsack problems.
Canadian Patent No. 2,881,033 discloses a method for solving the Lagrangian dual of a constrained quadratic programming problem using a quantum annealer. The method disclosed is based on an outer Lagrangian linearization method. Unfortunately, a limitation of this method when used in conjunction with a quantum annealer is that there may be an appearance of error-prone unconstrained quadratic optimization problems in the process.
There is a need for a method and a system for solving a Lagrangian dual optimization problem that will overcome at least one of the above-identified drawback.
Features of the invention will be apparent from review of the disclosure, drawings and description of the invention below.

**BRIEF SUMMARY**

According to a broad aspect, there is disclosed a method for solving a Lagrangian dual of a binary polynomially constrained polynomial programming problem, the method comprising use of a processing unit for: obtaining a binary polynomially constrained polynomial programming problem; until a convergence is detected, iteratively, providing a set of Lagrange multipliers, providing an unconstrained binary quadratic programming problem representative of a Lagrangian relaxation of the binary polynomially constrained polynomial programming problem at the set of Lagrange multipliers provided, providing the unconstrained binary quadratic programming problem to a binary optimizer, obtaining from the binary optimizer at least one corresponding solution, using the at least one corresponding solution to generate a new set of Lagrange multipliers; and providing all corresponding best-known primal-dual pairs of the Lagrangian dual of the binary polynomially constrained polynomial programming problem and best-known feasible solutions of the binary polynomially constrained polynomial programming problem after the convergence.
According to a broad aspect, there is disclosed a method for solving the Lagrangian dual of a binary polynomially constrained polynomial programming problem, the method comprising obtaining a binary polynomially constrained polynomial programming problem; until a convergence is detected, iteratively, providing a set of Lagrange multipliers, providing an unconstrained binary quadratic programming problem representative of the Lagrangian relaxation of the binary polynomially constrained polynomial programming problem at these Lagrange multipliers, providing the unconstrained binary quadratic programming problem to a binary optimizer, obtaining from the binary optimizer at least one corresponding solution, using the at least one corresponding solution to generate a new set of Lagrange multipliers; and providing all corresponding best-known primal-dual pairs of the Lagrangian dual of the binary polynomially constrained polynomial programming problem and best-known feasible solutions of the binary polynomially constrained polynomial programming problem after the convergence.

According to an embodiment, the obtaining of a binary polynomially constrained polynomial programming problem comprises obtaining data representative of a polynomial objective function; obtaining data representative of polynomial equality constraints; and obtaining data representative of polynomial inequality constraints.

According to an embodiment, the binary polynomially constrained polynomial programming problem is obtained from at least one of a user, a computer, a software package and an intelligent agent.

According to an embodiment, the obtaining of the binary polynomially constrained polynomial programming problem further comprises initializing software parameters and obtaining a step size subroutine.

According to an embodiment, the initializing of the software parameters comprises providing a generic degree reduced form of the generic Lagrangian relaxations of the binary polynomially constrained polynomial programming problem as a parameterized family of binary quadratic functions in the original and auxiliary variables, parameterized by the Lagrange multipliers.

According to an embodiment, the initializing of the software parameters also comprises providing a generic embedding of the generic degree reduced forms of the generic Lagrangian relaxations of the binary polynomially constrained polynomial programming problem; providing an embedding solver function for providing a list of solutions; providing one of initial values and default values for Lagrange multipliers and providing an error tolerance value for the convergence criteria; providing an integer representative of a limit on the total number of iterations; and a limit on the total number of non-improving iterations.

According to an embodiment, an initial Lagrangian relaxation of the binary polynomially constrained polynomial programming problem is generated using the initial Lagrange multipliers.

According to an embodiment, the initial degree reduced form of the Lagrangian relaxation of the binary polynomially constrained polynomial programming problem is solved using the quantum annealer and at least one corresponding solution is obtained.

According to an embodiment, the at least one corresponding solution is used to generate a subgradient of the Lagrangian dual of the binary polynomially constrained polynomial programming problem.

According to an embodiment, the at least one corresponding solution is used to generate at least one outer approximation cut for a linear reformulation of a Lagrangian dual of the binary polynomially constrained polynomial programming problem.

According to an embodiment, the providing of a corresponding solution to the Lagrangian dual of the binary polynomially constrained polynomial programming problem comprises storing the corresponding solution in a file.

According to a broad aspect, there is disclosed a digital computer comprising a central processing unit; a display device; a communication port for operatively connecting the digital computer to a binary optimizer; a memory unit comprising an application for solving a Lagrangian dual of a binary polynomially constrained polynomial programming problem, the application comprising instructions for obtaining a binary polynomially constrained polynomial programming problem; instructions for iteratively providing a set of Lagrange multipliers, for providing an unconstrained binary quadratic programming problem representative of the Lagrangian relaxation of the binary polynomially constrained polynomial programming problem at these Lagrange multipliers, for providing the unconstrained quadratic programming problem to the binary optimizer using the communication port, for obtaining from the binary optimizer via the communication port at least one corresponding solution and for using the at least one corresponding solution to generate a new set of Lagrange multipliers until a convergence is detected; instructions for providing all corresponding best-known primal-dual pairs of the Lagrangian dual of the binary polynomially constrained polynomial programming problem and best-known feasible solutions of the binary polynomially constrained polynomial programming problem after the convergence is detected and a data bus for interconnecting the central processing unit, the display device, the communication port and the memory unit.

According to a broad aspect, there is disclosed a non-transitory computer-readable storage medium for storing computer-executable instructions which, when executed, cause a digital computer to perform a method for solving the Lagrangian dual of a binary polynomially constrained polynomial programming problem, the method comprising obtaining a binary polynomially constrained polynomial programming problem; until a convergence is detected, iteratively: providing a set of Lagrange multipliers, providing an unconstrained binary quadratic programming problem representative of a Lagrangian relaxation of the binary polynomially constrained polynomial programming problem at these Lagrange multipliers, providing the unconstrained binary quadratic programming problem to a binary optimizer, obtaining from the binary optimizer at least one corresponding solution, using the at least one corresponding solution to generate a new set of Lagrange multipliers; and providing all corresponding best-known primal-dual pairs of the Lagrangian dual of the binary polynomially constrained polynomial programming problem and best-known feasible solutions of the binary polynomially constrained polynomial programming problem after the convergence is detected.

According to an embodiment, the binary optimizer comprises a quantum annealer.

An advantage of the method disclosed herein for solving the Lagrangian dual of a binary polynomially constrained polynomial programming problem is that it is less sensitive to errors of the quantum systems. Those errors may be caused by noisy quantum bits used in some implementations of quantum annealers (e.g. D-Wave Systems). The method disclosed herein therefore greatly improves the processing of a system comprising a quantum annealer and solves the technical problem of errors caused by noisy quantum bits used in some implementations of quantum annealers.

Another advantage of the method disclosed herein is that it provides a method for using Lagrangian duality in various applications, for example finding Lagrangian based bounds to integer and mixed-integer programming problems using a quantum annealer.

Another advantage of the method disclosed herein is that it improves the processing of a system for solving a Lagrangian dual of a binary polynomially constrained polynomial programming problem.

## DESCRIPTION OF THE DRAWINGS

In order that the invention may be readily understood, embodiments of the invention are illustrated by way of example in the accompanying drawings.

Figure 1 is a flowchart that shows an embodiment of a method for solving a Lagrangian dual of a binary polynomially constrained polynomial programming problem using a quantum annealer.

Figure 2 is a diagram of an embodiment of a system in which the method for solving a Lagrangian dual of a binary polynomially constrained polynomial programming problem using a quantum annealer may be implemented. In this embodiment, the system comprises a digital computer and a quantum annealer.

Figure 3 is a diagram that shows an embodiment of a digital computer used in the system for solving a Lagrangian dual of a binary polynomially constrained polynomial programming problem using a quantum annealer.

Figure 4 is a flowchart that shows an embodiment for providing a binary polynomially constrained polynomial programming problem.

Figure 5 is a flowchart that shows an embodiment for initializing software parameters used in an embodiment of the method for solving a Lagrangian dual of a binary polynomially constrained polynomial programming problem.

Figure 6 is a flowchart that shows an embodiment of the proposed method for updating the Lagrange multipliers.

Further details of the invention and its advantages will be apparent from the detailed description included below.

## DETAILED DESCRIPTION

In the following description of the embodiments, references to the accompanying drawings are by way of illustration of an example by which the invention may be practiced.

Terms

The term "invention" and the like mean "the one or more inventions disclosed in this application," unless expressly specified otherwise.

The terms "an aspect," "an embodiment," "embodiment," "embodiments," "the embodiment," "the embodiments," "one or more embodiments," "some embodiments," "certain embodiments," "one embodiment," "another embodiment" and the like mean "one or more (but not all) embodiments of the disclosed invention(s)," unless expressly specified otherwise.

A reference to "another embodiment" or "another aspect" in describing an embodiment does not imply that the referenced embodiment is mutually exclusive with another embodiment (e.g., an embodiment described before the referenced embodiment), unless expressly specified otherwise.

The terms "including," "comprising" and variations thereof mean "including but not limited to," unless expressly specified otherwise.

The terms "a," "an", "the" and "at least one", mean "one or more," unless expressly specified otherwise.

The term "plurality" means "two or more," unless expressly specified otherwise.

The term "herein" means "in the present application, including anything which may be incorporated by reference," unless expressly specified otherwise.

The term "e.g." and like terms mean "for example," and thus does not limit the term or phrase it explains. For example, in a sentence "the computer sends data (e.g., instructions, a data structure) over the Internet," the term "e.g." explains that "instructions" are an example of "data" that the computer may send over the Internet, and also explains that "a data structure" is an example of "data" that the computer may send over the Internet. However, both "instructions" and "a data structure" are merely examples of "data," and other things besides "instructions" and "a data structure" can be "data."

The term "i.e." and like terms mean "that is," and thus limits the term or phrase it explains. For example, in the sentence "the computer sends data (i.e., instructions) over the Internet," the term "i.e." explains that "instructions" are the "data" that the computer sends over the Internet.

The term "binary polynomially constrained polynomial programming problem" and like terms mean finding the minimum of a real polynomial $y = f(x)$ in several binary variables $x = (x_1, \ldots, x_n)$ subject to a (possibly empty) family of equality constraints determined by a (possibly empty) family of m equations $g_j(x) = 0$ for $j = 1, \ldots, m$ and a (possibly empty) family of inequality constraints determined by a (possibly empty) family of $\ell$ inequalities $h_j(x) \leq 0$ for $j = 1, \ldots, \ell$. Here all functions $g_i$ and $h_j$ are polynomials.

$$\begin{aligned}\min \quad & f(x) \\ subject\ to \quad & g_i(x) = 0 \quad \forall i \in \{1, \ldots, m\} \\ & h_j(x) \leq 0 \quad \forall j \in \{1, \ldots, \ell\} \\ & x_k \in \{0, 1\} \quad \forall k \in \{1, \ldots, n\} \end{aligned}$$

The term "domain" of the binary polynomially constrained polynomial programming problem, refers to the set $\{0, 1\}^n$ of vectors of size $n$ with binary entries. The term "feasible domain" of the binary polynomially constrained polynomial programming problem, refers to the subset $F \subseteq \{0, 1\}^n$ of the domain consisting of all binary vectors $v \in \{0, 1\}^n$ that satisfy all the m equality and $\ell$ inequality constraints above.

The above binary polynomially constrained polynomial programming problem will be denoted by $(P)$ and the optimal value of it will be denoted by $v(P)$. An optimal solution $x$, i.e., a vector at which the objective function attains the value $v(P)$ will be denoted by $x^*$.

The term "Lagrangian function" of the binary polynomially constrained polynomial programming problem $(P)$, means the following function:

$$L(x, \lambda, \mu) = f(x) + \sum_{i=1}^{m} \lambda_i g_i(x) + \sum_{j=1}^{\ell} \mu_j h_j(x)$$

The term "Lagrangian relaxation" of the binary polynomially constrained polynomial programming problem $(P)$, corresponding to fixed Lagrange multipliers $\lambda \in \mathbb{R}^m$ and $\mu \in \mathbb{R}_{\geq 0}^{\ell}$, is defined as

$$\delta_P(\lambda, \mu) = \min_{x \in \{0,1\}^n} \left( f(x) + \sum_{i=1}^{m} \lambda_i g_i(x) + \sum_{j=1}^{\ell} \mu_j h_j(x) \right)$$

The value of the above optimization, denoted as $\delta_P(\lambda, \mu)$ is known to be a lower bound for the optimal value of the original binary polynomially constrained polynomial programming, that is, $\delta_P(\lambda, \mu) \leq v(P)$.

The term "generic Lagrangian relaxation" of the binary polynomially constrained polynomial programming problem $(P)$, means the parameterized family $\left\{ L_{\lambda, \mu}(x) \right\}_{\{\lambda \in \mathbb{R}^m, \mu \in \mathbb{R}_{\geq 0}^{\ell}\}}$ of functions of $x$ where for every choice of parameters $\bar{\lambda} \in \mathbb{R}^m$ and $\bar{\mu} \in \mathbb{R}_{\geq 0}^{\ell}$ we have

$$L_{\bar{\lambda}, \bar{\mu}}(x) = L(x, \bar{\lambda}, \bar{\mu}).$$

The term "Lagrangian dual" of a binary polynomially constrained polynomial programming problem, is used for the following optimization problem:

$$\max_{\lambda,\mu} \quad \min_{x} \quad \left( f(x) + \sum_{i=1}^{m} \lambda_i g_i(x) + \sum_{j=1}^{\ell} \mu_j h_j(x) \right)$$

$$subject\ to \quad x \in \{0,1\}^n$$
$$\lambda \in \mathbb{R}^m$$
$$\mu \in \mathbb{R}^{\ell}_{\geq 0}$$

The value of the above optimization is denoted by $\delta(P)$ and is known to be a lower bound for the optimal value of the original binary polynomially constrained polynomial programming, that is, $\delta(P) \leq v(P)$. This value is unique and is also called the "Lagrangian dual bound" for the original binary polynomially constrained polynomial programming problem.

The term "optimal Lagrange multiplier," and the like, will refer to a, not necessarily unique, set of points $\lambda^*$ and $\mu^*$ at which the value $\delta(P)$ is attained in the above optimization problem.

The term "solution to the Lagrangian dual problem" of an original binary polynomially constrained polynomial programming problem, refers to the following collection of information received after solving the Lagrangian dual problem: (1) the Lagrangian dual bound; (2) a set of (not necessarily unique) optimal Lagrange multipliers as described above; and (3) a set of (not necessarily unique) binary vectors at which the optimal value of the Lagrangian dual problem is obtained at the given optimal Lagrange multipliers.

The term "primal-dual pair" refers to a vector $(\overline{x},\overline{\lambda,\mu})$ where $\overline{x}$ is representative of a (not necessarily unique) binary vector at which the optimal value of the Lagrangian relaxation corresponding to the Lagrange multipliers $(\overline{x,\lambda})$ is obtained.

The term "optimal primal-dual pair" refers to a primal-dual pair $(x^*,\lambda^*,\mu^*)$ for which $\delta_p(\lambda^*,\mu^*)$ attains the optimal value $\delta(P)$.

The term "best-known primal-dual pair" refers to a primal-dual pair $(x,\lambda,\mu)$ for which $\delta_p(\lambda,\mu)$ is the largest observed value of the function $\delta_p$ during a running process.

The term "best-known feasible solution" refers to a feasible vector $\overline{x}^*$ for which $f(\overline{x}^*)$ is the lowest amongst all observed feasible solutions of $(P)$.

The term "quantum annealer" and like terms mean a system consisting of one or many types of hardware that can find the optimal or sub-optimal solutions to an unconstrained binary polynomial programming problem. An example of this is a system consisting of a digital computer embedding a binary polynomially constrained polynomial programming as an Ising spin model, attached to an analog computer that carries optimization of a configuration of spins in an Ising spin model using quantum annealing as described, for example, in Farhi, E. et al., "Quantum Adiabatic Evolution Algorithms versus Simulated Annealing" arXiv.org:quant ph/0201031 (2002), pp. 1-16. An embodiment of such analog computer is disclosed by McGeoch, Catherine C. and Cong Wang, (2013), "Experimental Evaluation of an Adiabiatic Quantum System for Combinatorial Optimization" Computing Frontiers," May 14-16, 2013 (http://www.cs.amherst.edu/ccm/cf14-mcgeoch.pdf) and also disclosed in the Patent Application US 2006/0225165. It will be appreciated that the "quantum annealer" may also be comprised of "classical components," such as a classical computer. Accordingly, a "quantum annealer" may be entirely analog or an analog-classical hybrid. It will be also appreciated that a "quantum annealer" is an embodiment of a binary optimizer.

The term "generic degree reduced form" of the generic Lagrangian relaxation of the binary polynomially constrained polynomial programming problem $(P)$ refers to a parameterized family $\left\{q_{\lambda,\mu}(x,y)\right\}_{\{\lambda\in\mathbb{R}^m,\mu\in\mathbb{R}^{\ell}_{\geq 0}\}}$ of quadratic functions together with an assignment $aux: \{y_1, \ldots, y_t\} \to 2^{\{x_1,\ldots,x_n\}}$ of a subset of components of $x$ to each component of $y$.

The term "embedding" of a binary optimization problem, and the like, refer to an assignment $emb: \{x_1, \ldots, x_n, y_1, \ldots, y_t\} \to 2^{\{q_1,\ldots,q_N\}}$ of a subset of all the quantum bits of the quantum annealer to each binary variable $x_i$ and each auxiliary variable $y_j$ such that the connectivities between the variables are respected by the connectivities of their images under $emb$. For examples, the subsets of qubits corresponding to two variable $x_r$ and $x_s$ should have a coupling between them in the quantum annealer if the term $x_r x_s$ appears in the generic degree reduced form of the generic Lagrangian relaxation of the binary polynomially constrained polynomial programming problem. Specifications of the role of such an embedding in solving an unconstrained binary polynomial programming problem and presentation of an efficient algorithm for it are disclosed, for instance, in "A practical heuristic for finding graph minors," Jun Cai, William G. Macready, Aidan Roy, in U.S. Patent Application US 2008/0218519 and in U.S. Patent US 8,655,828 B2.

The term "embedding solver," and the like, refer to a function, procedure, and algorithm that consist of instructions for receiving an unconstrained binary quadratic programming problem, carrying a query to the quantum annealer using a provided embedding, and returning at least one result, each result containing a vector of binary entries, representative of a binary point in the domain of the provided unconstrained binary quadratic programming, the value of the objective function of unconstrained binary quadratic programming at that point, and the number of occurrences of the result in the entire number of reads.

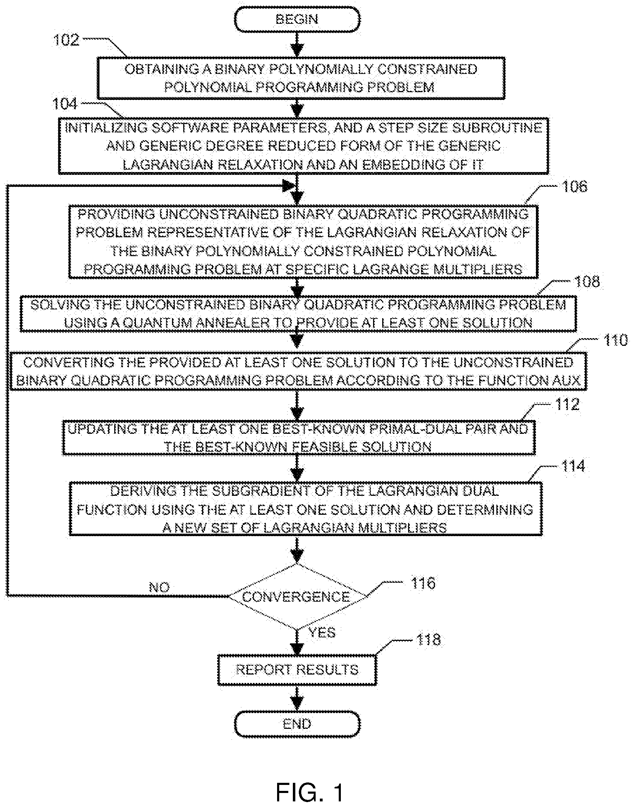

The term "subroutine" and the like, refer to a user-defined function, procedure, or algorithm that is called iteratively by the software throughout the run time. In the system disclosed herein, the step-size subroutine determines a next step-size for the iteration disclosed in Fig. 1. In the system disclosed herein, the embedding solver subroutine handles the queries to the quantum annealer provided an embedding.

The term "unconstrained binary quadratic programming problem" and like terms mean finding a minimum of an objective function $y = x^t Q\, x + b$ where $Q$ is a symmetric real square matrix of size $n$, and $b$ is a real number, also known as the bias of the objective function. The domain of the function is all vectors $x \in B^n = \{0, 1\}^n$ with binary entries.

An important class of binary polynomially constrained polynomial programming problems is that of quadratically constrained ones. The term "binary quadratically constrained quadratic programming problem," and the like, refer to the class of binary polynomially constrained polynomial programming problems for which all functions $g_i$ and $h_j$ are linear or degree two polynomials. Hence the problem can be rewritten as

$$
\begin{aligned}
\min \quad & f(x) \\
\text{subject to} \quad & A_{eq}x = b_{eq} \\
& A_{ineq}\, x \le b_{ineq} \\
& x^t A_{eq}^i x = b_{eq}^i \ \forall i \in \{1, \ldots, p\} \\
& x^t A_{ineq}^i x \le b_{ineq}^i \ \forall i \in \{1, \ldots, q\} \\
& x_i \in \{0, 1\} \ \forall i \in \{1, \ldots, n\},
\end{aligned}
$$

where $y = f(x)$ is a quadratic polynomial of several binary variables $x = (x_1, \ldots, x_n)$ subject to a (possibly empty) family of linear equality constraints determined by a linear system $A_{eq}x = b_{eq}$ where $A_{eq}$ is a matrix of size $m \times n$ and $b_{eq}$ is a column matrix of size $m \times 1$ and a (possibly empty) family of inequality constraints determined by $A_{ineq} \le b_{ineq}$ where $A_{ineq}$ is a matrix of size $\ell \times n$ and $b_{ineq}$ is a column matrix of size $\ell \times 1$. Also subject to a (possibly empty) family of quadratic equality constraints determined by a set of $p$ equations $x^t A_{eq}^i x = b_{eq}^i$ where $A_{eq}^i$ is of size $n \times n$ and $b_{eq}^i$ is a real number for each $i \in \{1, \cdots, p\}$. Also subject to a (possibly empty) family of quadratic inequality constraints determined by a set of q inequalities $x^t A_{ineq}^i x \le b_{ineq}^i$ where $A_{ineq}^i$ is of size $n \times n$ and $b_{ineq}^i$ is a real number for each $i \in \{1, \ldots, q\}$.

Neither the Title nor the Abstract is to be taken as limiting in any way as the scope of the disclosed invention(s). The title of the present application and headings of sections provided in the present application are for convenience only, and are not to be taken as limiting the disclosure in any way.

Numerous embodiments are described in the present application, and are presented for illustrative purposes only. The described embodiments are not, and are not intended to be, limiting in any sense. The presently disclosed invention(s) are widely applicable to numerous embodiments, as is readily apparent from the disclosure. One of ordinary skill in the art will recognize that the disclosed invention(s) may be practiced with various modifications and alterations, such as structural and logical modifications. Although particular features of the disclosed invention(s) may be described with reference to one or more particular embodiments and/or drawings, it should be understood that such features are not limited to usage in the one or more particular embodiments or drawings with reference to which they are described, unless expressly specified otherwise.

It will be appreciated that the invention may be implemented in numerous ways, including a method, a system, a computer readable medium such as a computer readable storage medium. In this specification, these implementations, or any other form that the invention may take, may be referred to as systems or techniques. A component such as a processor or a memory described as being configured to perform a task includes both a general component that is temporarily configured to perform the task at a given time or a specific component that is manufactured to perform the task.

With all this in mind, the present invention is directed to a method and system for solving a Lagrangian dual of a binary polynomially constrained polynomial programming problem.

While a quantum annealer is used in the embodiments disclosed below, it will be appreciated by the skilled addressee that a quantum annealer is an embodiment of a binary optimizer.

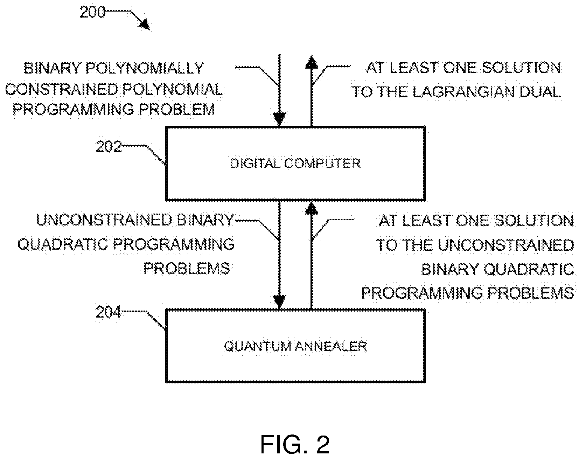

Now referring to Fig. 2, there is shown an embodiment of a system 200 in which an embodiment of the method for solving a Lagrangian dual of a binary polynomially constrained polynomial programming problem may be implemented.

The system 200 comprises a digital computer 202 and a quantum annealer 204.

The digital computer 202 receives a binary polynomially constrained polynomial programming problem and provides at least one solution to the Lagrangian dual of the binary polynomially constrained polynomial programming problem.

It will be appreciated that the binary polynomially constrained polynomial programming problem may be provided according to various embodiments.

In one embodiment, the binary polynomially constrained polynomial programming problem is provided by a user interacting with the digital computer 202.

Alternatively, the binary polynomially constrained polynomial programming problem is provided by another computer, not shown, operatively connected to the digital computer 202.

Alternatively, the binary polynomially constrained polynomial programming problem is provided by an independent software package.

Alternatively, the binary polynomially constrained polynomial programming problem is provided by an intelligent agent.

Similarly, it will be appreciated that the at least one solution to the Lagrangian dual of the binary polynomially constrained polynomial programming problem may be provided according to various embodiments.

In accordance with an embodiment, the at least one solution to the Lagrangian dual of the binary polynomially constrained polynomial programming problem is provided to the user interacting with the digital computer 202.

Alternatively, the at least one solution to the Lagrangian dual of the binary polynomially constrained polynomial programming problem is provided to another computer operatively connected to the digital computer 202.

In fact, it will be appreciated by the skilled addressee that the digital computer 202 may be any type of computer.

In one embodiment, the digital computer 202 is selected from a group consisting of desktop computers, laptop computers, tablet PCs, servers, smartphones, etc.

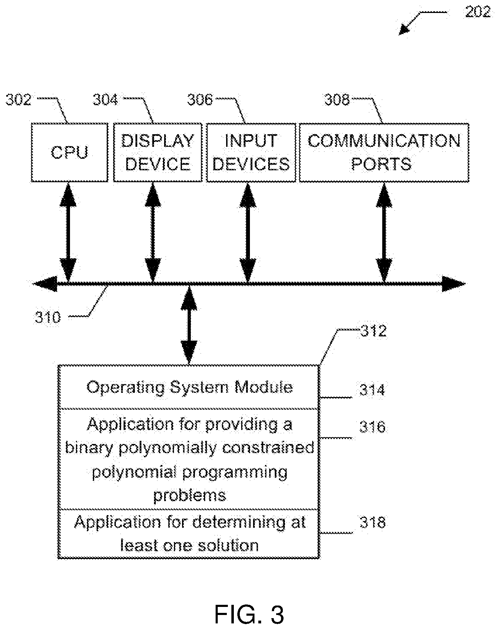

Now referring to Fig. 3, there is shown an embodiment of a digital computer 202. It will be appreciated that the digital computer 202 may also be broadly referred to as a processor.

In this embodiment, the digital computer 202 comprises a central processing unit (CPU) 302, also referred to as a microprocessor or processing unit, a display device 304, input devices 306, communication ports 308, a data bus 310 and a memory unit 312.

The CPU 302 is used for processing computer instructions. The skilled addressee will appreciate that various embodiments of the CPU 302 may be provided.

In one embodiment, the central processing unit 302 is a CPU Core i7-3820 running at 3.6 GHz and manufactured by Intel$^{(TM)}$.

The display device 304 is used for displaying data to a user. The skilled addressee will appreciate that various types of display device 304 may be used.

In one embodiment, the display device 304 is a standard liquid-crystal display (LCD) monitor.

The communication ports 308 are used for sharing data with the digital computer 202.

The communication ports 308 may comprise, for instance, a universal serial bus (USB) port for connecting a keyboard and a mouse to the digital computer 202.

The communication ports 308 may further comprise a data network communication port such as an IEEE 802.3 port for enabling a connection of the digital computer 202 with another computer via a data network.

The skilled addressee will appreciate that various alternative embodiments of the communication ports 308 may be provided.

In one embodiment, the communication ports 308 comprise an Ethernet port and a mouse port (e.g., Logitech$^{(TM)}$).

The memory unit 312 is used for storing computer-executable instructions.

It will be appreciated that the memory unit 312 comprises, in one embodiment, an operating system module 314.

It will be appreciated by the skilled addressee that the operating system module 314 may be of various types.

In an embodiment, the operating system module 314 is Windows$^{(TM)}$ 8 manufactured by Microsoft$^{(TM)}$.

The memory unit 312 further comprises an application for solving the Lagrangian dual of a binary polynomially constrained polynomial programming problem 316.

The application 316 comprises instructions for obtaining a binary polynomially constrained polynomial programming problem.

The application 316 further comprises instructions for iteratively, providing a set of Lagrange multipliers, providing an unconstrained binary quadratic programming problem representative of the Lagrangian relaxation of the binary polynomially constrained polynomial programming problem at these Lagrange multipliers, providing the unconstrained binary quadratic programming problem to a quantum annealer; obtaining from the quantum annealer at least one corresponding solution and for using the at least one corresponding solution to generate a new set of Lagrange multipliers.

The application 316 further comprises instructions for providing a corresponding at least one solution to the Lagrangian dual of the binary polynomially constrained polynomial programming problem once a convergence is detected.

Each of the central processing unit 302, the display device 304, the input devices 306, the communication ports 308 and the memory unit 312 is interconnected via the data bus 310.

Now referring back to Fig. 2, it will be appreciated that the quantum annealer 204 is operatively connected to the digital computer 202.

It will be appreciated that the coupling of the quantum annealer 204 to the digital computer 202 may be achieved according to various embodiments.

In one embodiment, the coupling of the quantum annealer 204 to the digital computer 202 is achieved via a data network.

It will be appreciated that the quantum annealer 204 may be of various types.

In one embodiment, the quantum annealer 204 is manufactured by D-Wave Systems Inc. More information on this embodiment of a quantum annealer applicable to 204 may be found at http://www.dwavesys.com. The skilled addressee will appreciate that various alternative embodiments may be provided for the quantum annealer 204.

More precisely, the quantum annealer 204 receives an unconstrained binary quadratic programming problem from the digital computer 202.

The quantum annealer 204 is capable of solving the unconstrained binary quadratic programming problem and of providing at least one corresponding solution. In the case where a plurality of corresponding solutions is provided, the plurality of corresponding solutions may comprise optimal and suboptimal solutions.

The at least one corresponding solution is provided by the quantum annealer 204 to the digital computer 202.

Now referring to Fig. 1 and according to processing step 102, a binary polynomially constrained polynomial programming problem is obtained.

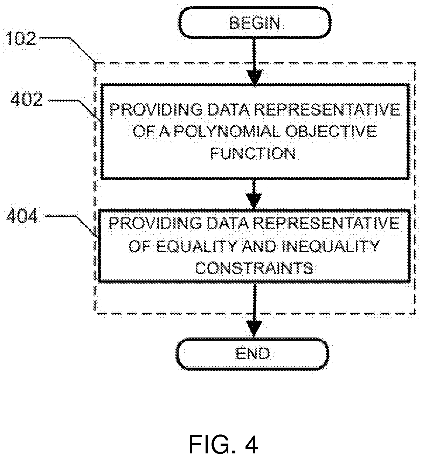

Now referring to Fig. 4, there is shown an embodiment for providing a binary polynomially constrained polynomial programming problem.

As mentioned above, the binary polynomially constrained polynomial programming problem can be represented as:

$$
\begin{aligned}
\min \quad & f(x) \\
\text{subject to} \quad & g_i(x) = 0 \quad \forall i \in \{1, \ldots, m\} \\
& h_j(x) \leq 0 \quad \forall j \in \{1, \ldots, \ell\} \\
& x_k \in \{0, 1\} \quad \forall k \in \{1, \ldots, n\}
\end{aligned}
$$

in which the functions $f(x)$, $g_i(x)$ and $h_j(x)$ are real polynomials in several variables.

According to processing step 402, data representative of a polynomial objective function $f(x)$ are provided.

According to processing step 404, data representative of the equality and inequality constraints $g_i(x)$ and $h_j(x)$ are provided.

It will be appreciated that the obtaining of a binary polynomially constrained polynomial programming problem may be performed according to various embodiments.

As mentioned above and in one embodiment, the binary polynomially constrained polynomial programming problem is provided by a user interacting with the digital computer 202.

Alternatively, the binary polynomially constrained polynomial programming problem is provided by another computer operatively connected to the digital computer 202.

Alternatively, the binary polynomially constrained polynomial programming problem is provided by an independent software package.

Alternatively, the binary polynomially constrained polynomial programming problem is provided by an intelligent agent.

Now referring to Fig. 1 and according to processing step 104, parameters of the software are initialized.

In one embodiment, the parameters of the software are initialized by the digital computer 202.

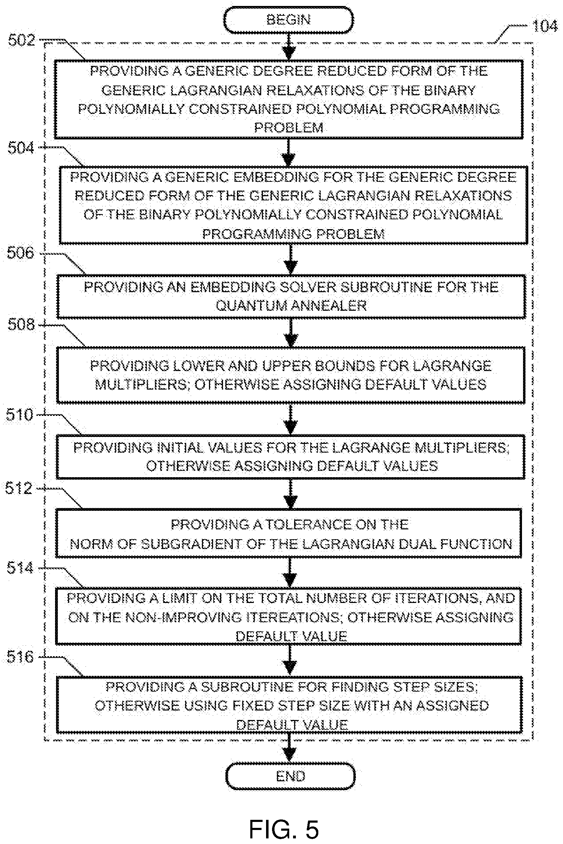

Now referring to Fig. 5, there is shown an embodiment for initializing parameters and subroutines or using default values for them.

According to processing step 502, a generic degree reduced form of the generic Lagrangian relaxations of the binary polynomially constrained polynomial programming problem is provided.

According to processing step 504, data representative of a generic embedding of the generic degree reduced form of the generic Lagrangian relaxations of the binary polynomially constrained polynomial programming problem is provided.

In one embodiment, the embedding is stored by a user in the namespace ORACLE, as ORACLE: :embedding.

Still referring to Fig. 5 and according to processing step 506, an embedding solver subroutine is provided.

In one embodiment, the function is implemented by the user in the namespace ORACLE, as ORACLE : :

solve_qubo.

The input parameter of the embedding solver subroutine is a pointer to an instance of the data type ORACLE: :qubo, representative of an unconstrained binary quadratic programming neglecting the corresponding bias of it.

The output of the embedding solver subroutine is a pointer to an instance of the type ORACLE: :result, representative of a list of optimal and suboptimal solutions to the unconstrained binary polynomial programming problem.

The following is an example of a code snippet in C++ for providing the subroutine using the API developed by D-Wave Systems (Sapi 2.0). All the functions and types used in this snippet are supported by Sapi 2.0 except two auxiliary functions qubo_to_ising and spin_to_binary. The former function changes an unconstrained binary quadratic programming problem of type ORACLE: : qubo, to an Ising spin problem of type sapi_problem by a change of variables $s = 2x - 1$. The second function received an array of vectors in {-1,1} and returns binary vectors by applying the inverse transformation $x = \frac{1}{2}(s+1)$.

```
#include <stdio.h>
#include <stdlib.h>
#include "dwave_sapi.h"

ORACLE::result* main(ORACLE::qubo& qubo) {

        sapi_globalInit();
        sapi_Problem* A = NULL;
        sapi_Problem* emb = NULL;
        sapi_Problem problem = qubo_to_ising(qubo);
        sapi_Embeddings* embeddings = NULL;
        sapi_FindEmbeddingParameters finder_param = SAPI_FIND_EMBEDDING_DEFAULT_PARAMETERS;
        sapi_IsingRangeProperties* range_prop = NULL;
        sapi_EmbedProblemResult* res = NULL;
        sapi_QuantumSolverParameters params =SAPI_QUANTUM_SOLVER_DEFAULT_PARAMETERS;
        sapi_IsingResult* answer = NULL;
        int* new_solutions = NULL;
        double chain_strength= -2.0;
        char err_msg[SAPI_ERROR_MESSAGE_MAX_SIZE];

        const char* url = ". . .";
        const char* token = ". . .";
        sapi_Connection* connection = NULL;
        sapi_remoteConnection(url, token, NULL, &connection, err_msg);
```

```
sapi_getHardwareAdjacency(solver, &A);
sapi_findEmbedding(&problem, A, &finder_param, &embeddings, err_msg);
sapi_embedProblem(&problem, embeddings, A,0,0, range_prop, &res, err_msg);

/* allocate space for new embedded problem result */
emb = malloc(sizeof(sapi_Problem*));
emb->len = res->problem.len + res->jc.len;
emb->elements = (sapi_ProblemEntry*)malloc(sizeof(sapi_ProblemEntry) * emb->len);

/* store embedded problem result in new problem */
for(index = 0; index < res->problem.len; index++) {
        emb->elements[index].i = res->problem.elements[index].i;
        emb->elements[index].j = res->problem.elements[index].j;
        emb->elements[index].value = res->problem.elements[index].value;
}
for(; index < emb->len; index++) {
        emb->elements[index].i = res->jc.elements[index - res->problem.len].i;
        emb->elements[index].j = res->jc.elements[index - res->problem.len].j;
        emb->elements[index].value = chain_strength;
}

params.num_reads = 1000;
sapi_solveIsing(solver, emb, (sapi_SolverParameters*)&params, &answer,err_msg);

size_t num_new_solutions;
new_solutions = malloc(answer->num_solutions * num_variables * sizeof(int*));
sapi_unembedAnswer(answer->solutions, answer->solution_len, answer->num_solutions,
embeddings, SAPI_BROKEN_CHAINS_MINIMIZE_ENERGY, &problem, new_solutions,
&num_new_solutions, err_msg);

return spin_to_binary(new_solutions);
}
```

It will be appreciated that, in one embodiment, the providing of the unconstrained binary optimization problem to the quantum annealer 204 is achieved using the digital computer 202.

More precisely, it will be appreciated that in one embodiment a token system is used over the Internet to provide access to the quantum annealer 204 remotely and to authenticate use.

It will be appreciated that in one embodiment the at least one solution is provided in a table by the quantum annealer 204, according to the instructions of use of the quantum annealer 204.

In one embodiment, the D-Wave system, provides the at least one solution in the data type sapi_IsingResult* which is then type-casted automatically to an instance of QUBO: :result*.

Still referring to Fig. 5 and according to processing step 508, lower and upper bounds for Lagrange multipliers are provided.

It will be appreciated that in one embodiment the providing of these real numbers of type double is achieved by overwriting the names ORACLE: :dual_lb and ORACLE: :dual_ub. Each of these types will be required to contain an array of doubles of size $m + \ell$. The first $m$ entries of these arrays represent, respectively, the lower and upper bounds for the Lagrange multipliers corresponding to the $m$ equality constraints and the last $\ell$ of them represent, respectively, the lower and upper bounds for the Lagrange multipliers corresponding to the $\ell$ inequality constraints.

It will be appreciated that if these names are not overwritten, the values of them are initialized with the default values.

In one embodiment, the default lower bound for a Lagrange multiplier corresponding to an equality constraint is -1e3 and the default upper bound for it is +1e3.

The default lower bound for a Lagrange multiplier corresponding to an inequality constraint is 0 and the default upper bound for it is +1e3.

Still referring to Fig. 5 and according to processing step 510, initial values for the Lagrange multipliers are provided.

It will be appreciated that the providing of these real valued numbers is achieved by overwriting the name ORACLE: :dual_init_val with an array of doubles of size $m + \ell$. If this name is not overwritten, the values are initialized with default values.

The default initial value for any of the Lagrange multipliers, corresponding to any of equality or inequality constraints, is 0.

According to processing step 512, an error tolerance value on the norm of a subgradient of the Lagrangian dual is provided. If the norm of any subgradient of the Lagrangian relaxation falls below this tolerance, it is assumed that strong duality holds. In such case, the Lagrange multipliers are optimal. Unless overwritten by the user and according to one embodiment, the error tolerance value is initialized to 1e-5 and stored as ORACLE: :tol. The error tolerance value is used in several points in the software.

According to one embodiment, ORACLE: :tol is used for checking equality and inequality conditions. In particular, any system of inequalities $LHS \leq RHS$ is considered satisfied if the value of all entries in $LHS - RHS$ is at most ORACLE: :tol. Similarly, any system of equalities $LHS = RHS$ is considered satisfied if the absolute value of all entries in $LHS - RHS$ is at most ORACLE: :tol.

Still referring to Fig. 5 and according to processing step 514, a limit on the total number of iterations is provided.

Unless overwritten by the user and according to one embodiment, the limit on the number of iterations is initialized to 1e3 and stored as ORACLE: :MaxItr.

If the algorithm reaches ORACLE: :MaxItr iterations of the processing step 116, it terminates and returns the at least one best-known primal-dual pair and the at least one best-known feasible solution.

According to processing step 514, a limit on the number of non-improving iterations is provided.

Unless overwritten by the user and according to one embodiment, the limit on the number of iterations is initialized to 10 and stored as ORACLE: :MaxNonImpItr. If the best-known Lagrangian dual value does not increase in ORACLE: :MaxNonImpItr iterations, the algorithm terminates and returns the at least one best-known primal-dual pair and the at least one best-known feasible solution.

According to processing step 516, a subroutine for finding the step size is provided.

In one embodiment, the subroutine is implemented by the user in the namespace ORACLE, as ORACLE: :StepSize. If ORACLE: :StepSize is not overwritten by the user, a fixed step size for a default value is used.

In one embodiment, the subroutine ORACLE: :StepSize receives as input, an object of type double* representative of a search direction and returns as output, an object of type double representative of a step size.

In one embodiment, the search direction is the subgradient of the Lagrangian dual function and the step size is the fixed value of 1.

Now referring back to Fig. 1 and according to processing step 106, an unconstrained binary quadratic programming problem representative of the Lagrangian relaxation of the binary polynomially constrained polynomial programming problem ($P$) at the current values of the Lagrange multipliers is generated.

It will be appreciated that in one embodiment, the unconstrained binary quadratic programming problem representative of the Lagrangian relaxation of the binary polynomially constrained polynomial programming problem ($P$) at the current values of the Lagrange multipliers is generated by the digital computer 202.

More precisely, it will be appreciated that in the present embodiment, the generation of the unconstrained binary quadratic programming problem is achieved by substituting the current values of the Lagrange multipliers for the parameters $\lambda$ and $\mu$ in the generic degree reduced form $q_{\lambda,\mu}(x,y)$ of the generic Lagrangian relaxations of the binary polynomially constrained polynomial programming problem ($P$).

In one embodiment, the information of the unconstrained binary quadratic programming problem is stored in the name ORACLE: :qubo.

Still referring to Fig. 1 and according to processing step 108, the subroutine ORACLE: :solve_qubo is called with the unconstrained binary quadratic programming problem ORACLE: :qubo and the embedding ORACLE: :embedding as inputs in order to provide at least one corresponding solution for the unconstrained binary quadratic programming problem from the quantum annealer 204.

It will be appreciated that the at least one corresponding solution of the unconstrained binary quadratic programming problem is achieved in one embodiment with a pointer to an instance of type ORACLE: :result.

Still referring to Fig. 1 and according to processing step 110, the at least one solution to the unconstrained binary quadratic programming problem is converted to a point in the domain of the binary polynomially constrained polynomial programming problem ($P$).

Still referring to Fig. 1 and according to processing step 112, a test is performed in order to determine if any of the at least one solution for the unconstrained binary quadratic programming problem corresponds to a feasible solution to the binary polynomially constrained polynomial programming problem ($P$).

According to the same processing step, the at least one best-known primal-dual pair, and the at least one best-known feasible solution, are updated.

Now referring to processing step 114, at least one corresponding solution of the unconstrained binary quadratic programming is used to generate a subgradient of the Lagrangian relaxation, $\delta_P(\lambda,\mu)$.

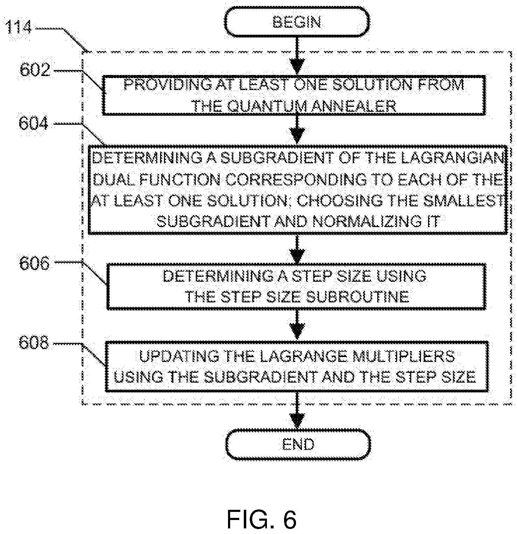

Now referring to Fig. 6, and according to processing step 602, at least one corresponding binary vector in the domain of the binary polynomially constrained polynomial programming problem ($P$) is provided.

According to processing step 604, a subgradient of the Lagrangian relaxation corresponding to the solution $\bar{x}$ of the unconstrained binary quadratic programming problem is derived as:

$$\nabla_{\lambda_i} L(\lambda, \mu) = g_i(\bar{x}) \ for \ i = 1, \dots, m$$

$$\nabla_{\mu_j} L(\lambda, \mu) = h_j(\bar{x}) \ for \ j = 1, \dots, \ell \ .$$

In one embodiment, one may choose the subgradient with the smallest norm when multiple binary solutions of the unconstrained quadratic programming problem is provided.

In one embodiment, one may normalize the derived subgradient.

According to processing step 606, the derived subgradient is provided to the step size subroutine and a value for the step size is attained.

According to an embodiment, if a step size subroutine is initialized by the user, the step size $\alpha$ is found by a call to ORACLE: :StepSize.

According to processing step 608, the Lagrange multipliers are updated as follows:

$$\lambda_i^{new} = \lambda_i^{old} + \alpha \nabla_{\lambda_i} L(\lambda, \mu) = \lambda_i^{old} + \alpha g_i(\bar{x}) \quad \text{for } i = 1, \dots, m,$$

$$\mu_j^{new} = \mu_j^{old} + \alpha \nabla_{\mu_j} L(\lambda, \mu) = \mu_j^{old} + \alpha h_j(\bar{x}) \qquad \text{for } j = 1, \dots, \ell \ .$$

Now referring back to Fig. 1 and according to processing step 116, a test is performed in order to find out if the best-known value of $\delta_P(\lambda, \mu)$ has improved in the previous ORACLE: :MaxNonImpltr steps.

In the case where the optimal value of $\delta_P(\lambda, \mu)$ has not improved in the past ORACLE: :MaxNonImpltr steps and according to processing step 118, the results of the optimization are provided.

It will be appreciated that in one embodiment, the results comprise the set of all best known primal-dual pairs $(x^*, \lambda^*, \mu^*)$ and all best known feasible solutions.

In one embodiment, the results are stored using the digital computer in a file.

It will be appreciated that an advantage of the method disclosed herein is that it enables an efficient method for finding the solution of a binary polynomially constrained polynomial programming problem by finding the solution of its Lagrangian dual using a quantum annealer.

It will be further appreciated that the method disclosed herein improves the processing of a system for solving a Lagrangian dual of a binary polynomially constrained polynomial programming problem.

It will be appreciated that the Lagrange multipliers are updated iteratively until termination. The program terminates when either the norm of the subgradient of the Lagrangian dual function is at most ORACLE::tol or no improvement in the best known primal-dual pair is observed after ORACLE: :MaxNonImpltr iterations, or after ORACLE: :MaxItr iterations.

The following is an illustration of a use of the method described herein once applied to the maximum quadratic stable set problem.

Let $G = (V, E)$ define a graph on $n$ vertices; $W$ be a symmetric square matrix of size $n$ representing the weights of edges $E$; and $A$ be the adjacency matrix of $G$. The maximum quadratic stable set problem is formulated as

$$\begin{aligned} \max \quad & x^t W x, \\ \text{subject to} \quad & x^t A x = 0, \\ & x_i \in \{0, 1\} \ \forall i \in \{1, \dots, n\}. \end{aligned}$$

It will be appreciated that by taking the negative of the objective function, the maximization objective function may be written as a minimization one as follows:

$$\begin{aligned} \min \quad & -x^t W x, \\ \text{subject to} \quad & x^t A x = 0, \\ & x_i \in \{0, 1\} \ \forall i \in \{1, \dots, n\}. \end{aligned}$$

Moreover, it will be appreciated that the constraint $x^t A x = 0$ may be substituted with $x^t A x \leq 0$. This is because both $A$ and $x$ are binary (i.e. $x^t A x \geq 0$ for any binary vector $x \in \{0, 1\}^n$) so $x^t A x \leq 0$ is satisfied for all binary vectors $x$ for which the identity $x^t A x = 0$ holds. The maximum quadratic stable set problem can be solved through the following

formulation:

$$\begin{aligned} \min \quad & -x^t W x, \\ \text{subject to} \quad & x^t A x \leq 0, \\ & x_i \in \{0, 1\} \ \forall i \in \{1, \ldots, n\}. \end{aligned}$$

In one example, let a graph with 5 vertices represent a group of 5 coworkers. To each pair of coworkers, a utility factor is assigned for the collaboration between them. A utility factor is assigned to each individual for their performance; these values are on the diagonal of matrix W. The utilities can be represented with an upper triangular matrix:

$$W_u = \begin{pmatrix} 5 & 0 & 3 & 5 & 2 \\ 0 & -1 & 1 & -1 & 4 \\ 0 & 0 & 1 & 7 & 3 \\ 0 & 0 & 0 & 3 & 0 \\ 0 & 0 & 0 & 0 & 2 \end{pmatrix}.$$

The utility matrix $W$ may as well be represented by the $5 \times 5$ symmetric matrix $W = \frac{1}{2}(W_u + W_u^{\ t})$. For the above example, $W$ would be:

$$W = \begin{pmatrix} 5 & 0 & 1.5 & 2.5 & 1 \\ 0 & -1 & 0.5 & -0.5 & 2 \\ 1.5 & 0.5 & 1 & 3.5 & 1.5 \\ 2.5 & -0.5 & 3.5 & 3 & 0 \\ 1 & 2 & 1.5 & 0 & 2 \end{pmatrix}.$$

Suppose each worker has a working shift and matrix $A$ has nonzero entries for the pair of coworkers that have overlapping shifts:

$$A = \begin{pmatrix} 0 & 0 & 1 & 0 & 1 \\ 0 & 0 & 0 & 1 & 0 \\ 1 & 0 & 0 & 0 & 1 \\ 0 & 1 & 0 & 0 & 0 \\ 1 & 0 & 1 & 0 & 0 \end{pmatrix}.$$

The problem of selecting the most productive team for a project such that no two team-members have overlapped shifts is an instance of the maximum quadratic stable set problem.

Give the above-defined matrices $A$ and $W$ the binary polynomially constrained polynomial programming problem

$$\begin{aligned} \min \quad & -x^t W x, \\ \text{subject to} \quad & x^t A x \leq 0, \\ & x_i \in \{0, 1\} \ \forall i \in \{1, \ldots, n\} \end{aligned}$$

is obtained according to processing step 102.

Since the two polynomials in the objective function and the inequality constraint of the above example are quadratic, the degree reduced form of the Lagrangian relaxation of this problem is the same as the Lagrangian relaxation itself. The embedding of a complete graph of size 5 is provided. The following code snippet provides an embedding of a complete graph of size 5 on a $K_{4,4}$-bipartite chimera block consisting of two parts each of size 4 and indexed by integers 0 to 3 in one part and by integers 4 to 7 in the second part.

```
sapi_Embeddings* ORACLE::embedding = NULL;
ORACLE::embedding = (sapi_Embeddings*)malloc(sizeof(sapi_Embeddings));
ORACLE::embedding->len = solver_properties->quantum_solver->num_qubits;
```

```
ORACLE::embedding->elements= malloc(sizeof(int) * embeddings->len);
for (int i= 0; i < ORACLE::embedding->len; i++) ORACLE::embedding->elements[i]= -1;
ORACLE::embedding->elements[0]= 0;
ORACLE::embedding->elements[1]= 1;
ORACLE::embedding->elements[5]= 1;
ORACLE::embedding->elements[2]= 2;
ORACLE::embedding->elements[6]= 2;
ORACLE::embedding->elements[3]= 3;
ORACLE::embedding->elements[7]= 3;
ORACLE::embedding->elements[4]= 4;
```

Lower and upper bounds of the Lagrangian multiplier are set as 0 and 100, respectively. 0 is assigned as the initial value of the Lagrangian multiplier. The tolerance on the norm of the subgradient of the Lagrangian dual function is set to $10^{-3}$. The limit on the total number of iterations and the number of non-improving iterations is set to 100 and 5, respectively. The step-size subroutine used in this example is a subroutine that provides the fixed step size of size 0.5 according to the following script

double ORACLE::StepSize() { return 0.5; }

When the method starts, the list of best feasible solution and the best primal-dual pair is initialized as empty sets. The single Lagrangian multiplier of the presented method is initialized at $\lambda^1 = 0$, and the problem

$$\min_{x \in \{0,1\}^n} -x^t W x$$

is solved by a quantum annealer. The attained optimal solution is $x^1 = (1,1,1,1,1)$ and the optimal value is -33. Since $x^1$ is not feasible, the list of best feasible solution is not updated. The best primal-dual pair, however, is updated as $(x^1, \lambda^1)$.

The subgradient of the Lagrangian relaxation

$$\min_{x \in \{0,1\}^n} -x^t W x + \lambda(x^t A x)$$

is $x^t A x = 8$ for $x^1 = (1,1,1,1,1)$. Suppose for the step-size subroutine, a fixed step-size of 0.5 is used. The next Lagrangian multiplier is then computed as

$$\lambda^2 = 0 + 0.5 * 8 = 4.$$

The Lagrangian relaxation problem

$$\min_{x \in \{0,1\}^n} -x^t W x + 4(x^t A x)$$

is solved by a quantum annealer. The optimal solution $x^2 = (1,0,1,1,0)$ with optimal value -16 is obtained. The best primal-dual pair is updated as $(x^2, \lambda^2)$, but the best feasible solution is left as empty set since $x^2$ is not feasible.

The subgradient of the Lagrangian relaxation at this solution is 2. The next Lagrangian multiplier is then computed as

$$\lambda^3 = 4 + 0.5 * 2 = 5.$$

The Lagrangian relaxation problem

$$\min_{x \in \{0,1\}^n} -x^t W x + 5(x^t A x)$$

is solved by a quantum annealer. The optimal solution $x^3 = (1,0,1,1,0)$ with optimal value -14 is obtained. The best primal-dual pair is updated as $(x^3, \lambda^3)$, but the best feasible solution is left as empty set since $x^3$ is not feasible.

The subgradient of the Lagrangian relaxation at this solution is 2. The next Lagrangian multiplier is then computed as

$$\lambda^4 = 5 + 0.5 * 2 = 6.$$

The Lagrangian relaxation problem

$$\min_{x \in \{0,1\}^n} -x^t W x + 6(x^t A x)$$

is solved by a quantum annealer. The optimal solution $x^4$ = (1,0,0,1,0) with optimal value -13 is obtained. $x^4$ is feasible, so the best feasible solution is updated as well as the best primal-dual pair ($x^4$, $\lambda^4$).

At the current solution the norm of the subgradient of the Lagrangian relaxation is 0 and the method terminates. The best feasible solution $x^4$ = (1,0,0,1,0), and the best primal-dual pair ($x^4$, $\lambda^4$) = ( (1,0,0,1,0), 6) is reported.

For the present application, the obtained solution means that among all teams such that no two coworkers have overlapping shifts, team of workers 1 and 4 is the most productive team.

It will be appreciated that an advantage of the method disclosed herein is that it improves the processing of a system for solving a Lagrangian dual of a binary polynomially constrained polynomial programming problem. More precisely, the method disclosed herein is less prone to errors than prior-art methods, which is of great advantage.

It will be appreciated that a non-transitory computer-readable storage medium is further disclosed. The non-transitory computer-readable storage medium is used for storing computer-executable instructions which, when executed, cause a digital computer to perform a method for solving a Lagrangian dual of a binary polynomially constrained polynomial programming problem, the method comprising obtaining a binary polynomially constrained polynomial programming problem; until a convergence is detected, iteratively: providing a set of Lagrange multipliers, providing an unconstrained binary quadratic programming problem representative of a Lagrangian relaxation of the binary polynomially constrained polynomial programming problem at these Lagrange multipliers, providing the unconstrained binary quadratic programming problem to a quantum annealer, obtaining from the quantum annealer at least one corresponding solution, using the at least one corresponding solution to generate a new set of Lagrange multipliers; and providing all corresponding best-known primal-dual pairs of the Lagrangian dual of the binary polynomially constrained polynomial programming problem and best-known feasible solutions of the binary polynomially constrained polynomial programming problem after the convergence is detected.

Although the above description relates to specific embodiments as presently contemplated by the inventors, it will be understood that the invention in its broad aspect includes functional equivalents of the elements described herein.

## Claims

1. A method for solving a Lagrangian dual of a binary polynomially constrained polynomial programming problem by a quantum annealer, the method reducing sensitivity to errors of the quantum annealer and comprising:
   use of a processing unit (302) for:

   obtaining a binary polynomially constrained polynomial programming problem;
   until a convergence is detected, iteratively,
   providing a set of Lagrange multipliers,
   providing an unconstrained binary quadratic programming problem representative of a Lagrangian relaxation of the binary polynomially constrained polynomial programming problem at the set of Lagrange multipliers provided,
   providing the unconstrained binary quadratic programming problem to a binary optimizer comprising the quantum annealer (204),
   obtaining from the quantum annealer at least one corresponding solution,
   using the at least one corresponding solution to generate a subgradient of a Lagrangian dual function of the binary polynomially constrained polynomial programming problem and to generate a new set of Lagrange multipliers based on the subgradient by the following equations:

$$\lambda_i^{new} = \lambda_i^{old} + \alpha \nabla_{\lambda_i} L(\lambda, \mu) = \lambda_i^{old} + \alpha\, g_i(\bar{x}) \quad \text{for } i = 1, \ldots, m,$$

$$\mu_j^{new} = \mu_j^{old} + \alpha \nabla_{\mu_j} L(\lambda, \mu) = \mu_j^{old} + \alpha h_j(\bar{x}) \qquad \text{for } j = 1, \ldots, \ell .$$

,

wherein

$\lambda_i^{new}, \mu_j^{new}$ being a new Lagrange multiplier,

$\lambda_i^{old}, \mu_j^{old}$ being a provided Lagrange multiplier,

$\nabla_{\lambda i}, \nabla_{\mu j}$ being a subgradient,

$\alpha$ being a step size,

$L(\lambda, \mu)$ being a Lagrangian function,

$g_i$ being an equality constraint,

$h_j$ being an inequality constraint,

$\bar{x}$ being a solution of the unconstrained binary quadratic programming problem,

m being a number of equality constraints,

l being a number of inequality constraints; and

providing all corresponding best-known primal-dual pairs of the Lagrangian dual of the binary polynomially constrained polynomial programming problem and best-known feasible solutions of the binary polynomially constrained polynomial programming problem after the convergence.

2. The method as claimed in claim 1, wherein the obtaining of a binary polynomially constrained polynomial programming problem comprises:

   obtaining data representative of a polynomial objective function;
   obtaining data representative of polynomial equality constraints; and obtaining data representative of polynomial inequality constraints.

3. The method as claimed in any one of claims 1 to 2, wherein the binary polynomially constrained polynomial programming problem is obtained from at least one of a user, a computer, a software package and an intelligent agent.

4. The method as claimed in any one of claims 1 to 3, wherein the obtaining of the binary polynomially constrained polynomial programming problem further comprises initializing software parameters and obtaining a step size subroutine.

5. The method as claimed in claim 4, wherein the initializing of the software parameters comprises:

   providing a generic degree reduced form of the generic Lagrangian relaxations of the binary polynomially constrained polynomial programming problem as a parameterized family of binary quadratic functions in the original and auxiliary variables,
   parameterized by the Lagrange multipliers.

6. The method as claimed in claim 4, wherein the initializing of the software parameters also comprises:

   providing a generic embedding of the generic degree reduced forms of the generic Lagrangian relaxations of the binary polynomially constrained polynomial programming problem;
   providing an embedding solver function for providing a list of solutions; providing one of initial values and default values for Lagrange multipliers and providing an error tolerance value for the convergence criteria;
   providing an integer representative of a limit on the total number of iterations; and a limit on the total number of non-improving iterations.

7. The method as claimed in claim 1, wherein an initial Lagrangian relaxation of the binary polynomially constrained polynomial programming problem is generated using the initial set of Lagrange multipliers.

8. The method as claimed in claim 1, wherein the at least one corresponding solution is used to generate at least one outer approximation cut for a linear reformulation of a Lagrangian dual of the binary polynomially constrained polynomial programming problem.

9. The method as claimed in any one of claims 1 to 8, wherein the providing of a corresponding solution to the Lagrangian dual of the binary polynomially constrained polynomial programming problem comprises storing the corresponding solution to a file.

10. A digital computer (202) comprising:

a central processing unit (302);
a display device (304);
a communication port (308) for operatively connecting the digital computer to a binary optimizer comprising a quantum annealer (204);
a memory unit (312) comprising an application (316) for solving a Lagrangian dual of a binary polynomially constrained polynomial programming problem by the quantum annealer, the application reducing sensitivity to errors of the quantum annealer and comprising:

instructions for obtaining a binary polynomially constrained polynomial programming problem;
instructions for iteratively providing a set of Lagrange multipliers and providing an unconstrained binary quadratic programming problem representative of the Lagrangian relaxation of the binary polynomially constrained polynomial programming problem at these Lagrange multipliers, providing the unconstrained quadratic programming problem to the quantum annealer using the communication port; obtaining from the quantum annealer via the communication port at least one corresponding solution and using the at least one corresponding solution to generate a subgradient of a Lagrangian dual function of the binary polynomially constrained polynomial programming problem and to generate a new set of Lagrange multipliers until a convergence is detected based on the subgradient by the following equations:

$$\lambda_i^{new} = \lambda_i^{old} + \alpha \nabla_{\lambda_i} L(\lambda, \mu) = \lambda_i^{old} + \alpha \, g_i(\bar{x}) \quad \text{for } i = 1, \ldots, m,$$

$$\mu_j^{new} = \mu_j^{old} + \alpha \nabla_{\mu_j} L(\lambda, \mu) = \mu_j^{old} + \alpha h_j(\bar{x}) \quad \text{for } j = 1, \ldots, \ell.$$

wherein

$\lambda_i^{new}, \mu_j^{new}$ being a new Lagrange multiplier,

$\lambda_i^{old}, \mu_j^{old}$ being a provided Lagrange multiplier,

$\nabla_{\lambda i}, \nabla_{\mu j}$ being a subgradient,
$\alpha$ being a step size,
$L(\lambda, \mu)$ being a Lagrangian function,
$g_i$ being an equality constraint,
$h_j$ being an inequality constraint,
$\bar{x}$ being a solution of the unconstrained binary quadratic programming problem,
m being a number of equality constraints,
l being a number of inequality constraints;
instructions for providing all corresponding best-known primal-dual pairs of the Lagrangian dual of the binary polynomially constrained polynomial programming problem and best-known feasible solutions of the binary polynomially constrained polynomial programming problem after the convergence is detected; and
a data bus (310) for interconnecting the central processing unit, the display device, the communication port and the memory unit.

11. A non-transitory computer-readable storage medium for storing computer-executable instructions which, when executed, cause a digital computer (202) to perform a method for solving a Lagrangian dual of a binary polynomially constrained polynomial programming problem by a quantum annealer, the method reducing sensitivity to errors of the quantum annealer and comprising:

obtaining a binary polynomially constrained polynomial programming problem;
until a convergence is detected, iteratively:

providing a set of Lagrange multipliers,
providing an unconstrained binary quadratic programming problem representative of a Lagrangian relaxation of the binary polynomially constrained polynomial programming problem at these Lagrange multipliers,
providing the unconstrained binary quadratic programming problem to a binary optimizer comprising the quantum annealer (204),
obtaining from the quantum annealer at least one corresponding solution, using the at least one corresponding solution to generate a subgradient of a Lagrangian dual function of the binary polynomially constrained polynomial programming problem and to generate a new set of Lagrange multipliers based on the subgradient by the following equations:

$$\lambda_i^{new} = \lambda_i^{old} + \alpha \, \nabla_{\lambda_i} L(\lambda, \mu) = \lambda_i^{old} + \alpha \, g_i(\bar{x}) \quad \text{for } i = 1, \ldots, m,$$

$$\mu_j^{new} = \mu_j^{old} + \alpha \nabla_{\mu_j} L(\lambda, \mu) = \mu_j^{old} + \alpha h_j(\bar{x}) \quad \text{for } j = 1, \ldots, \ell \, .$$

,

wherein

$\lambda_i^{new}, \mu_j^{new}$ being a new Lagrange multiplier,

$\lambda_i^{old}, \mu_j^{old}$ being a provided Lagrange multiplier, $\nabla_{\lambda i}, \nabla_{\mu j}$ being a subgradient,

$\alpha$ being a step size,
$L(\lambda, \mu)$ being a Lagrangian function,
$g_i$ being an equality constraint,
$\underline{h_j}$ being an inequality constraint,
$\underline{x}$ being a solution of the unconstrained binary quadratic programming problem,
m being a number of equality constraints,
I being a number of inequality constraints; and
providing all corresponding best-known primal-dual pairs of the Lagrangian dual of the binary polynomially constrained polynomial programming problem and best-known feasible solutions of the binary polynomially constrained polynomial programming problem after the convergence is detected.

**Patentansprüche**

1. Verfahren zum Lösen eines Lagrange-Duals eines binären polynomial beschränkten polynomialen Programmierproblems durch einen adiabatischen Quantencomputer, wobei das Verfahren die Empfindlichkeit gegenüber Fehlern des adiabatischen Quantencomputers verringert und Folgendes umfasst
Verwendung einer Verarbeitungseinheit (302) zum:

Erhalten eines binären polynomiell beschränkten polynomialen Programmierproblems;
bis eine Konvergenz festgestellt wird, iterativ,
Bereitstellen eines Satzes von Lagrange-Multiplikatoren,
Bereitstellen eines unbeschränkten binären quadratischen Programmierproblems, das eine Lagrange-Relaxation des binären polynomial beschränkten polynomialen Programmierproblems an der Menge der bereitgestellten Lagrange-Multiplikatoren darstellt,
Bereitstellen des unbeschränkten binären quadratischen Programmierproblems an einen binären Optimierer, der den adiabatischen Quantencomputer (204) umfasst,
Erhalten mindestens einer entsprechenden Lösung von dem adiabatischen Quantencomputer,
Verwendung der mindestens einen entsprechenden Lösung, um einen Subgradienten einer Lagrange-Dualfunktion des binären polynomial beschränkten polynomialen Programmierproblems zu erzeugen und um einen neuen Satz von Lagrange-Multiplikatoren auf der Grundlage des Subgradienten durch die folgenden Gleichungen zu erzeugen:

$$\lambda_i^{new} = \lambda_i^{old} + \alpha \nabla_{\lambda_i} L(\lambda, \mu) = \lambda_i^{old} + \alpha\, g_i(\bar{x}) \quad \text{for } i = 1, \dots, m,$$

$$\mu_j^{new} = \mu_j^{old} + \alpha \nabla_{\mu_j} L(\lambda, \mu) = \mu_j^{old} + \alpha h_j(\bar{x}) \qquad \text{for } j = 1, \dots, \ell .$$

,

wobei

$\lambda_i^{new}, \mu_j^{new}$ ein neuer Lagrange-Multiplikator ist,

$\lambda_i^{old}, \mu_j^{old}$ ein bereitgestellter Lagrange-Multiplikator ist,

$\nabla_{\lambda_i}, \nabla_{\mu_j}$ ein Subgradient ist,

$\alpha$ eine Schrittgröße ist,

$L(\lambda, \mu)$ eine Lagrangesche Funktion ist,

$g_i$ eine Gleichheitsrandbedingung ist,

$h_j$ eine Ungleichheitsrandbedingung ist,

$x$ eine Lösung des unbeschränkten binären quadratischen Programmierproblems ist,

m eine Anzahl von Gleichheitsrandbedingungen ist,

l eine Anzahl von Ungleichheitsrandbedingungen ist; und

Bereitstellen aller entsprechenden besten bekannten primär-dualen Paare des Lagrange-Duals des binären polynomial beschränkten polynomialen Programmierproblems und die besten bekannten zulässigen Lösungen des binären polynomial beschränkten polynomialen Programmierproblems nach der Konvergenz.

2. Verfahren nach Anspruch 1, wobei das Erhalten eines binären polynomial eingeschränkten polynomialen Programmierproblems umfasst:

Erhalten von Daten, die für eine polynomiale Zielfunktion repräsentativ sind;

Erhalten von Daten, die für polynomiale Gleichheitsrandbedingungen repräsentativ sind; und Erhalten von Daten, die für polynomiale Ungleichheitsrandbedingungen repräsentativ sind.

3. Verfahren nach einem der Ansprüche 1 bis 2, wobei das binäre polynomial beschränkte polynomiale Programmierproblem von mindestens einem Benutzer, einem Computer, einem Softwarepaket oder einem intelligenten Agenten erhalten wird.

4. Verfahren nach einem der Ansprüche 1 bis 3, wobei das Erhalten des binären polynomial beschränkten polynomialen Programmierproblems ferner das Initialisieren von Softwareparametern und das Erhalten einer Schrittgrößen-Unterroutine umfasst.

5. Verfahren nach Anspruch 4, wobei das Initialisieren der Softwareparameter umfasst:
Bereitstellen einer generischen grad-reduzierten Form der generischen Lagrange-Relaxierungen des binären polynomial beschränkten polynomialen Programmierproblems als parametrisierte Familie von binären quadratischen Funktionen in den ursprünglichen und Hilfsvariablen, parametrisiert durch die Lagrange-Multiplikatoren.

6. Verfahren nach Anspruch 4, wobei das Initialisieren der Software-Parameter auch umfasst:

Bereitstellen einer generischen Einbettung der generischen grad-reduzierten Formen der generischen Lagrange-Relaxierungen des binären polynomial beschränkten polynomialen Programmierproblems;

Bereitstellen einer Einbettungslöserfunktion zur Bereitstellung einer Liste von Lösungen; Bereitstellen von Anfangswerten und Standardwerten für Lagrange-Multiplikatoren und Bereitstellen eines Fehlertoleranzwertes für die Konvergenzkriterien;

Bereitstellen einer ganzen Zahl, die für eine Begrenzung der Gesamtzahl der Iterationen repräsentativ ist; und eine Begrenzung der Gesamtzahl der nichtverbessernden Iterationen.

7. Verfahren nach Anspruch 1, wobei eine anfängliche Lagrange-Relaxation des binären polynomial beschränkten polynomialen Programmierproblems unter Verwendung der anfänglichen Menge von Lagrange-Multiplikatoren erzeugt wird.

8. Verfahren nach Anspruch 1, wobei die mindestens eine entsprechende Lösung verwendet wird, um mindestens einen äußeren Näherungsschnitt für eine lineare Umformulierung eines Lagrange-Duals des binären polynomial beschränkten polynomialen Programmierproblems zu erzeugen.

9. Verfahren nach einem der Ansprüche 1 bis 8, wobei das Bereitstellen einer entsprechenden Lösung für das Lagrangesche Dual des binären polynomial beschränkten polynomialen Programmierproblems das Speichern der entsprechenden Lösung in einer Datei umfasst.

10. Digitalrechner (202), aufweisend

eine zentrale Verarbeitungseinheit (302);
eine Anzeigevorrichtung (304);
einen Kommunikationsanschluss (308) zur operativen Verbindung des Digitalrechners mit einem binären Optimierer, der einen adiabatischen Quantencomputer (204) umfasst;
eine Speichereinheit (312), die eine Anwendung (316) zum Lösen eines Lagrangeschen Duals eines binären polynomial beschränkten polynomialen Programmierproblems durch den adiabatischen Quantencomputer umfasst, wobei die Anwendung die Empfindlichkeit gegenüber Fehlern des adiabatischen Quantencomputers reduziert und aufweist:

Anweisungen zur Lösung eines binären polynomial beschränkten polynomialen Programmierproblems;
Anweisungen zum iterativen Bereitstellen eines Satzes von Lagrange-Multiplikatoren und zum Bereitstellen eines unbeschränkten binären quadratischen Programmierproblems, das die Lagrange-Relaxation des binären polynomial beschränkten polynomialen Programmierproblems bei diesen Lagrange-Multiplikatoren darstellt, zum Bereitstellen des unbeschränkten quadratischen Programmierproblems an den adiabatischen Quantencomputer unter Verwendung des Kommunikationsanschlusses; Erhalten mindestens einer entsprechenden Lösung von dem adiabatischen Quantencomputer über den Kommunikationsanschluss und Verwenden der mindestens einen entsprechenden Lösung, um einen Subgradienten einer Lagrange-Dualfunktion des binären polynomial beschränkten polynomialen Programmierproblems zu erzeugen und einen neuen Satz von Lagrange-Multiplikatoren zu erzeugen, bis eine Konvergenz auf der Grundlage des Subgradienten durch die folgenden Gleichungen erkannt wird:

$$\lambda_i^{new} = \lambda_i^{old} + \alpha \, \nabla_{\lambda_i} L(\lambda, \mu) = \lambda_i^{old} + \alpha \, g_i(\bar{x}) \quad \text{for } i = 1, ..., m,$$

$$\mu_j^{new} = \mu_j^{old} + \alpha \nabla_{\mu_j} L(\lambda, \mu) = \mu_j^{old} + \alpha h_j(\bar{x}) \quad \text{for } j = 1, ..., \ell \, .$$

,

wobei

$\lambda_i^{new}, \mu_j^{new}$ ein neuer Lagrange-Multiplikator ist,
$\lambda_i^{old}, \mu_j^{old}$ ein bereitgestellter Lagrange-Multiplikator ist,
$\nabla_{\lambda i}, \nabla_{\mu j}$ ein Subgradient ist,
$\alpha$ eine Schrittgröße ist,
$L(\lambda, \mu)$ eine Lagrangesche Funktion ist,
$g_i$ eine Gleichheitsrandbedingung ist,
$h_j$ eine Ungleichheitsrandbedingung ist,
$x$ eine Lösung des unbeschränkten binären quadratischen Programmierproblems ist,
m eine Anzahl von Gleichheitsrandbedingungen ist,
l eine Anzahl von Ungleichheitsrandbedingungen ist;
Anweisungen zum Bereitstellen aller entsprechenden besten bekannten primär-dualen Paare des Lagrange-Duals des binären polynomial beschränkten polynomialen Programmierproblems und der besten bekannten zulässigen Lösungen des binären polynomial beschränkten polynomialen Programmierproblems, nachdem die Konvergenz erkannt wurde; und
einen Datenbus (310) zum Verbinden der zentralen Verarbeitungseinheit, der Anzeigevorrichtung, des Kommunikationsanschlusses und der Speichereinheit.

**11.** Nicht-transitorisches, computerlesbares Speichermedium zum Speichern von computerausführbaren Befehlen, die, wenn sie ausgeführt werden, einen digitalen Computer (202) dazu veranlassen, ein Verfahren zum Lösen eines Lagrange-Duals eines binären, polynomial beschränkten Polynom-Programmierproblems durch einen adiabatischen Quantencomputer auszuführen, wobei das Verfahren die Empfindlichkeit gegenüber Fehlern des Quanten-Tempomachers reduziert und Folgendes umfasst:

Erhalten eines binären, polynomial beschränkten polynomialen Programmierproblems;
bis eine Konvergenz festgestellt wird, iterativ:

Bereitstellen eines Satzes von Lagrange-Multiplikatoren,
Bereitstellen eines unbeschränkten binären quadratischen Programmierproblems, das eine Lagrange-Relaxation des binären polynomial beschränkten polynomialen Programmierproblems bei diesen Lagrange-Multiplikatoren darstellt,
Bereitstellen des unbeschränkten binären quadratischen Programmierproblems für einen binären Optimierer, der den adiabatischen Quantencomputer (204) umfasst, Erhalten von mindestens einer entsprechenden Lösung von dem adiabatischen Quantencomputer, Verwenden der mindestens einen entsprechenden Lösung, um einen Subgradienten einer Lagrange-Dualfunktion des binären polynomial beschränkten polynomialen Programmierproblems zu erzeugen und um einen neuen Satz von Lagrange-Multiplikatoren auf der Grundlage des Subgradienten durch die folgenden Gleichungen zu erzeugen:

$$\lambda_i^{new} = \lambda_i^{old} + \alpha\, \nabla_{\lambda_i} L(\lambda, \mu) = \lambda_i^{old} + \alpha\, g_i(\bar{x}) \quad \text{for } i = 1, \dots, m,$$

$$\mu_j^{new} = \mu_j^{old} + \alpha \nabla_{\mu_j} L(\lambda, \mu) = \mu_j^{old} + \alpha h_j(\bar{x}) \qquad \text{for } j = 1, \dots, \ell.$$

,

wobei

$\lambda_i^{new}, \mu_j^{new}$ ein neuer Lagrange-Multiplikator ist,

$\lambda_i^{old}, \mu_j^{old}$ ein bereitgestellter Lagrange-Multiplikator ist,

$\nabla_{\lambda i}, \nabla_{\mu j}$ ein Subgradient ist,

$\alpha$ eine Schrittgröße ist,

$L(\lambda, \mu)$ eine Lagrangesche Funktion ist,

$g_i$ eine Gleichheitsrandbedingung ist,

$h_j$ eine Ungleichheitsrandbedingung ist,

$x$ eine Lösung des unbeschränkten binären quadratischen Programmierproblems ist,

m eine Anzahl von Gleichheitsrandbedingungen ist,

l eine Anzahl von Ungleichheitsrandbedingungen ist; und

Bereitstellen aller entsprechenden bestbekannten primär-dualen Paare des Lagrangeschen Duals des binären polynomial beschränkten polynomialen Programmierproblems und der bestbekannten zulässigen Lösungen des binären polynomial beschränkten polynomialen Programmierproblems, nachdem die Konvergenz festgestellt wurde.

**Revendications**

**1.** Procédé pour résoudre un dual lagrangien d'un problème de programmation polynomiale contrainte polynomialement binaire par un dispositif de recuit quantique, le procédé réduisant la sensibilité aux erreurs du dispositif de recuit quantique et comprenant :
utiliser une unité de traitement (302) pour :

obtenir un problème de programmation polynomiale contrainte polynomialement binaire ;
jusqu'à ce qu'une convergence soit détectée, de manière itérative,
fournir un ensemble de multiplicateurs de Lagrange,
fournir un problème de programmation quadratique binaire non contrainte représentant une relaxation lagrangienne du problème de programmation polynomiale contrainte polynomialement binaire dans l'ensemble de multiplicateurs de Lagrange fourni,

fournir le problème de programmation quadratique binaire non contrainte à un optimiseur binaire comprenant le dispositif de recuit quantique (204),

obtenir à partir du dispositif de recuit quantique au moins une solution correspondante,

utiliser l'au moins une solution correspondante pour générer un sous-gradient d'une fonction duale lagrangienne du problème de programmation polynomiale contrainte polynomialement binaire et pour générer un nouvel ensemble de multiplicateurs de Lagrange sur la base du sous-gradient par les équations suivantes :

$$\lambda_i^{new} = \lambda_i^{old} + \alpha \nabla_{\lambda_i} L(\lambda, \mu) = \lambda_i^{old} + \alpha\, g_i(\tilde{x}) \quad \text{for } i = 1, \dots, m,$$

$$\mu_j^{new} = \mu_j^{old} + \alpha \nabla_{\mu_j} L(\lambda, \mu) = \mu_j^{old} + \alpha h_j(\tilde{x}) \quad \text{for } j = 1, \dots, \ell\,. \qquad ,$$

dans lequel

$\lambda_i^{new}, \mu_j^{new}$ est un nouveau multiplicateur de Lagrange,

$\lambda_i^{old}, \mu_j^{old}$ est un multiplicateur de Lagrange fourni,

$\nabla_{\lambda i}, \nabla_{\mu j}$ est un sous-gradient,

$\alpha$ est une taille d'étape,

$L(\lambda, \mu)$ est une fonction lagrangienne,

$g_i$ est une contrainte d'égalité,

$h_j$ est une contrainte d'inégalité,

$\tilde{x}$ est une solution du problème de programmation quadratique binaire non contrainte,

m est un nombre de contraintes d'égalité,

l est un certain nombre de contraintes d'inégalité ; et fournir toutes les paires primales-duales les plus connues correspondantes du dual lagrangien du problème de programmation polynomiale contrainte polynomialement binaire et toutes les solutions réalisables les plus connues du problème de programmation polynomiale contrainte polynomialement binaire après la convergence.

2. Procédé selon la revendication 1, dans lequel l'obtention d'un problème de programmation polynomiale contrainte polynomialement binaire comprend :

   obtenir des données représentant une fonction objective polynomiale ;
   obtenir des données représentant des contraintes d'égalité polynomiale ; et obtenir des données représentant des contraintes d'inégalité polynomiale.

3. Procédé selon l'une quelconque des revendications 1 à 2, dans lequel le problème de programmation polynomiale contrainte polynomialement binaire est obtenu à partir d'au moins un parmi un utilisateur, un ordinateur, un progiciel et un agent intelligent.

4. Procédé selon l'une quelconque des revendications 1 à 3, dans lequel l'obtention du problème de programmation polynomiale contrainte polynomialement binaire comprend en outre l'initialisation de paramètres logiciels et l'obtention d'une sous-routine de taille d'étape.

5. Procédé selon la revendication 4, dans lequel l'initialisation des paramètres logiciels comprend :
   fournir une forme générique réduite des relaxations lagrangiennes génériques du problème de programmation polynomiale contrainte polynomialement binaire en tant que famille paramétrée de fonctions quadratiques binaires dans les variables d'origine et auxiliaires paramétrées par les multiplicateurs de Lagrange.

6. Procédé selon la revendication 4, dans lequel l'initialisation des paramètres logiciels comprend également :

   fournir une incorporation générique des formes génériques réduites des relaxations lagrangiennes génériques du problème de programmation polynomiale contrainte polynomialement binaire ;

fournir une fonction de solveur d'incorporation pour fournir une liste de solutions ; fournir une des valeurs initiales et des valeurs par défaut pour les multiplicateurs de Lagrange et fournir une valeur de tolérance d'erreur pour les critères de convergence ;

fournir un nombre entier représentant une limite pour le nombre total d'itérations ; et une limite pour le nombre total d'itérations sans amélioration.

7. Procédé selon la revendication 1, dans lequel une relaxation lagrangienne initiale du problème de programmation polynomiale contrainte polynomialement binaire est générée en utilisant l'ensemble initial de multiplicateurs de Lagrange.

8. Procédé selon la revendication 1, dans lequel l'au moins une solution correspondante est utilisée pour générer au moins une coupe d'approximation externe pour une reformulation linéaire d'un dual lagrangien du problème de programmation polynomiale contrainte polynomialement binaire.

9. Procédé selon l'une quelconque des revendications 1 à 8, dans lequel la fourniture d'une solution correspondante au dual lagrangien du problème de programmation polynomiale contrainte polynomialement binaire comprend le stockage de la solution correspondante sur un fichier.

10. Ordinateur numérique (202) comprenant :

une unité de traitement centrale (302) ;
un dispositif d'affichage (304) ;
un port de communication (308) pour la connexion opérationnelle de l'ordinateur numérique à un optimiseur binaire comprenant un dispositif de recuit quantique (204) ;
une unité de mémoire (312) comprenant une application (316) de résolution d'un dual lagrangien d'un problème de programmation polynomiale contrainte polynomialement binaire par le dispositif de recuit quantique, l'application réduisant la sensibilité aux erreurs du dispositif de recuit quantique et comprenant :

des instructions pour obtenir un problème de programmation polynomiale contrainte polynomialement binaire ;
des instructions pour fournir de manière itérative un ensemble de multiplicateurs Lagrange et pour fournir à un problème de programmation quadratique binaire non contrainte représentant la relaxation lagrangienne du problème de programmation polynomiale contrainte polynomialement binaire dans ces multiplicateurs de Lagrange, pour fournir le problème de programmation quadratique non contrainte au dispositif de recuit quantique en utilisant le port de communication ; pour obtenir à partir du dispositif de recuit quantique via le port de communication au moins une solution correspondante et utiliser l'au moins une solution correspondante pour générer un sous-gradient d'une fonction duale lagrangienne du problème de programmation polynomiale contrainte polynomialement binaire et pour générer un nouvel ensemble de multiplicateurs de Lagrange jusqu'à ce qu'une convergence soit détectée sur la base du sous-gradient par les équations suivantes :

$$\lambda_i^{new} = \lambda_i^{old} + \alpha \nabla_{\lambda_i} L(\lambda, \mu) = \lambda_i^{old} + \alpha\, g_i(\ddot{x}) \quad \text{for } i = 1, ..., m,$$

$$\mu_j^{new} = \mu_j^{old} + \alpha \nabla_{\mu_j} L(\lambda, \mu) = \mu_j^{old} + \alpha h_j(\ddot{x}) \quad \text{for } j = 1, ..., \ell.$$

dans lequel

$\lambda_i^{new}, \mu_j^{new}$ est un nouveau multiplicateur de Lagrange,
$\lambda_i^{old}, \mu_j^{old}$

est un multiplicateur de Lagrange fourni,
$\nabla_{\lambda_i}, \nabla_{\mu_j}$ est un sous-gradient,
$\alpha$ est une taille d'étape,
$L(\lambda, \mu)$ est une fonction lagrangienne,
$g_i$ est une contrainte d'égalité,

$h_j$ est une contrainte d'inégalité,

$x$ est une solution du problème de programmation quadratique binaire non contrainte,

m est un nombre de contraintes d'égalité.

l est un nombre de contraintes d'inégalité ;

des instructions pour fournir toutes les paires primales-duales les plus connues correspondantes du dual lagrangien du problème de programmation polynomiale contrainte polynomialement binaire et toutes les solutions réalisables les plus connues du problème de programmation polynomiale contrainte polynomialement binaire après la détection de la convergence ; et

un bus de données (310) pour l'interconnexion de l'unité de traitement centrale, du dispositif d'affichage, du port de communication et de l'unité de mémoire.

11. Support de stockage lisible par ordinateur non transitoire pour le stockage d'instructions exécutables par ordinateur qui, lorsqu'elles sont exécutées, amènent un ordinateur numérique (202) à effectuer un procédé pour la résolution d'un dual lagrangien d'un problème de programmation polynomiale contrainte polynomialement binaire par un dispositif de recuit quantique, le procédé réduisant la sensibilité aux erreurs du dispositif de recuit quantique et comprenant :

obtenir un problème de programmation polynomiale contrainte polynomialement binaire ;

jusqu'à ce qu'une convergence soit détectée, de manière itérative :

fournir d'un ensemble de multiplicateurs de Lagrange,

fournir un problème de programmation quadratique binaire non contrainte représentant une relaxation lagrangienne du problème de programmation polynomiale contrainte polynomialement binaire dans ces multiplicateurs de Lagrange,

fournir le problème de programmation quadratique binaire non contrainte à un optimiseur binaire comprenant le dispositif de recuit quantique (204),

obtenir à partir du dispositif de recuit quantique d'au moins une solution correspondante, en utilisant l'au moins une solution correspondante pour générer un sous-gradient d'une fonction duale lagrangienne du problème de programmation polynomiale contrainte polynomialement binaire et pour générer un nouvel ensemble de multiplicateurs de Lagrange sur la base du sous-gradient par les équations suivantes :

$$\lambda_i^{new} = \lambda_i^{old} + \alpha \nabla_{\lambda_i} L(\lambda, \mu) = \lambda_i^{old} + \alpha\, g_i(\bar{x}) \quad \text{for } i = 1, \ldots, m,$$

$$\mu_j^{new} = \mu_j^{old} + \alpha \nabla_{\mu_j} L(\lambda, \mu) = \mu_j^{old} + \alpha h_j(\bar{x}) \quad \text{for } j = 1, \ldots, \ell.$$

dans lequel

$\lambda_i^{new}, \mu_j^{new}$ est un nouveau multiplicateur de Lagrange,

$\lambda_i^{old}, \mu_j^{old}$ est un multiplicateur de Lagrange fourni,

$\nabla_{\lambda_i}, \nabla_{\mu_j}$ est un sous-gradient,

$\alpha$ est une taille d'étape,

$L(\lambda, \mu)$ est une fonction lagrangienne,

$g_i$ est une contrainte d'égalité,

$h_j$ est une contrainte d'inégalité,

$x$ est une solution du problème de programmation quadratique binaire non contrainte,

m est un nombre de contraintes d'égalité,

l est un nombre de contraintes d'inégalité ; et

fournir toutes les paires primales-duales les plus connues correspondantes du dual lagrangien du problème de programmation polynomiale contrainte polynomialement binaire et de toutes les solutions réalisables les plus connues du problème de programmation polynomiale contrainte polynomialement binaire après la détection de la convergence.

FIG. 1

FIG. 2

202

302 304 306 308

| CPU | DISPLAY DEVICE | INPUT DEVICES | COMMUNICATION PORTS |

310

312

| Operating System Module | 314 |
| Application for providing a binary polynomially constrained polynomial programming problems | 316 |
| Application for determining at least one solution | 318 |

FIG. 3

FIG. 4

BEGIN

502 — PROVIDING A GENERIC DEGREE REDUCED FORM OF THE GENERIC LAGRANGIAN RELAXATIONS OF THE BINARY POLYNOMIALLY CONSTRAINED POLYNOMIAL PROGRAMMING PROBLEM

104

504 — PROVIDING A GENERIC EMBEDDING FOR THE GENERIC DEGREE REDUCED FORM OF THE GENERIC LAGRANGIAN RELAXATIONS OF THE BINARY POLYNOMIALLY CONSTRAINED POLYNOMIAL PROGRAMMING PROBLEM

506 — PROVIDING AN EMBEDDING SOLVER SUBROUTINE FOR THE QUANTUM ANNEALER

508 — PROVIDING LOWER AND UPPER BOUNDS FOR LAGRANGE MULTIPLIERS; OTHERWISE ASSIGNING DEFAULT VALUES

510 — PROVIDING INITIAL VALUES FOR THE LAGRANGE MULTIPLIERS; OTHERWISE ASSIGNING DEFAULT VALUES

512 — PROVIDING A TOLERANCE ON THE NORM OF SUBGRADIENT OF THE LAGRANGIAN DUAL FUNCTION

514 — PROVIDING A LIMIT ON THE TOTAL NUMBER OF ITERATIONS, AND ON THE NON-IMPROVING ITEREATIONS; OTHERWISE ASSIGNING DEFAULT VALUE

516 — PROVIDING A SUBROUTINE FOR FINDING STEP SIZES; OTHERWISE USING FIXED STEP SIZE WITH AN ASSIGNED DEFAULT VALUE

END

FIG. 5

114

602

604

606

608

BEGIN

PROVIDING AT LEAST ONE SOLUTION FROM
THE QUANTUM ANNEALER

DETERMINING A SUBGRADIENT OF THE LAGRANGIAN
DUAL FUNCTION CORRESPONDING TO EACH OF THE
AT LEAST ONE SOLUTION; CHOOSING THE SMALLEST
SUBGRADIENT AND NORMALIZING IT

DETERMINING A STEP SIZE USING
THE STEP SIZE SUBROUTINE

UPDATING THE LAGRANGE MULTIPLIERS
USING THE SUBGRADIENT AND THE STEP SIZE

END

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2921711
- US 05127116
- CA 2881033
- US 20060225165 A
- US 20080218519 A, Jun Cai, William G. Macready, Aidan Roy
- US 8655828 B2

**Non-patent literature cited in the description**

- **DUAN LI ; XIAOLING SUN.** *Nonlinear integer programming*
- **JEREMY F. SHAPIRO.** A survey of Lagrangean techniques for discrete optimization. Operations Research Center, Massachusetts Institute of Technology
- Lagrangean relaxation for integer programming. **A.M. GEOFFRION.** Mathematics Programming Study. North-Holland Publishing Company, 1974, vol. 2, 82-114
- **FARHI, E. et al.** Quantum Adiabatic Evolution Algorithms versus Simulated Annealing. *arXiv.org:quant ph/0201031,* 2002, 1-16
- **MCGEOCH, CATHERINE C. ; CONG WANG.** Experimental Evaluation of an Adiabatic Quantum System for Combinatorial Optimization. *Computing Frontiers,* 2013, http://www.cs.amherst.edu/ccm/cf14-mcgeoch.pdf